# EUROPÄISCHE PATENTSCHRIFT

(11) **EP 3 964 377 B1**
(45) Veröffentlichungstag und Bekanntmachung des Hinweises auf die Patenterteilung: **31.07.2024**
(21) Anmeldenummer: 21198271.5
(22) Anmeldetag: 23.01.2020
(51) Int. Cl.: B60J 3/02

(54) **VORRICHTUNG ZUM ABSCHIRMEN VON SONNENLICHT FÜR EIN KRAFTFAHRZEUG**
DEVICE FOR SHIELDING AGAINST SUNLIGHT FOR A MOTOR VEHICLE
DISPOSITIF DE PROTECTION CONTRE LA LUMIÈRE SOLAIRE POUR UN VÉHICULE AUTOMOBILE

(30) Priorität: 31.01.2019 DE 102019102490
(43) Veröffentlichungstag der Anmeldung: 09.03.2022
(62) Teilanmeldung aus: 20153298.3
(73) Patentinhaber: MAN Truck & Bus SE, 80995 München (DE)
(72) Erfinder: Burmeister, Achim, 80995 München (DE); Schönherr, Stephan, 80995 München (DE); Rix, Holger, 80995 München (DE)
(74) Vertreter: v. Bezold & Partner Patentanwälte - PartG mbB

(56) Entgegenhaltungen:
- DE-A1- 102008 032 391
- DE-A1- 3 435 743
- JP-U- S5 741 512
- US-B1- 9 248 721

## Beschreibung

Die Erfindung betrifft eine Vorrichtung zum Abschirmen von Sonnenlicht, vorzugsweise eine Sonnenblenden-Vorrichtung, für ein Kraftfahrzeug, vorzugsweise ein Nutzfahrzeug.

Es ist bekannt, zur Verbesserung der Fahrersicht eines Kraftfahrzeugs Sonnenblenden zu verwenden, um eine Blendung des Fahrers durch Gegenlicht/Sonnenlicht zu verhindern. In Nutzfahrzeugen wie Omnibussen und Lastkraftwagen können beispielsweise Sonnenrollos verwendet werden, die oberhalb einer Windschutzscheibe angebracht und nach unten ausrollbar sind, um den Fahrer vor Gegenlicht/Sonnenlicht abzuschirmen.

Herkömmliche Sonnenblenden können aus verschiedenen Gründen nachteilig sein. Z. B. können herkömmliche Sonnenblenden einen nur unzureichenden Bereich der Windschutzscheibe abdecken, sodass die Fahrersicht unter bestimmten Einfallbedingungen des Gegenlichts/Sonnenlichts, weiterhin geblendet werden kann.

Das Dokument JP S57 41512 U offenbart eine Säulenverkleidungsstruktur für Kraftfahrzeuge. Ein Teil einer vorderen Säulenverkleidung kann durch einen Selbstscharnierabschnitt verschwenkt werden, um einen Spalt zwischen der vorderen Säulenverkleidung und einer Sonnenblende zu verschließen.

Das Dokument DE 10 2008 032391 A1 beschreibt eine Sonnenblendschutzeinrichtung für ein Kraftfahrzeug mit einer Sonnenblende, die von einer Nichtgebrauchsposition in eine Gebrauchsposition bewegbar ist. In der Gebrauchsposition ist die Sonnenblende unter Ausbildung eines Spaltes zwischen der Sonnenblende und einem Fahrzeugteil vor einer Fensterscheibe angeordnet. Die Sonnenblendschutzeinrichtung weist ferner eine Zusatzblende auf, die von einer Nichtgebrauchsposition in eine Gebrauchsposition bewegbar ist. In der Gebrauchsposition verdeckt die Zusatzblende den Spalt. Die Zusatzblende ist beweglich an dem Fahrzeugteil angeordnet.

Das Dokument US 9 248 721 B1 betrifft eine Sonnenblendenanordnung mit einem magnetischen Rückhaltesystem. Die Sonnenblendenanordnung umfasst einen Sonnenblendenkörper, eine Haltestange, ein ferromagnetisches Element und einen Permanentmagneten in einem Dachhimmel. Der Sonnenblendenkörper ist schwenkbar an der Haltestange aufgenommen, wobei der Sonnenblendenkörper einen ersten Endrand, einen zweiten Endrand, einen ersten Längsrand und einen zweiten Längsrand aufweist, die einen vollständigen Umfang des Sonnenblendenkörpers definieren. Die Haltestange ist mit dem Sonnenblendenkörper in der Nähe einer ersten Ecke verbunden, wo der erste Endrand auf den ersten Längsrand trifft. Das ferromagnetische Element wird in dem Sonnenblendenkörper in der Nähe einer zweiten Ecke gehalten, wo der zweite Endrand auf den zweiten Längsrand trifft. Der Permanentmagnet und das ferromagnetische Element sind so ausgerichtet, dass der Sonnenblendenkörper zu dem Dachhimmel hin angezogen und in einer Ausgangsposition neben dem Dachhimmel gehalten wird.

Das Dokument DE 34 35 743 A1 offenbart eine an einem oberen Abschnitt eines Windschutzscheibenpfostens eines Motorfahrzeuges angelenkte Sonnenblende zur Bewegung zwischen einer üblichen Stellung zum Abschirmen der Augen eines Insassen des Motorfahrzeuges und einer Ruhestellung im Motorfahrzeug.

Der Erfindung liegt die Aufgabe zu Grunde, eine alternative und/oder verbesserte Vorrichtung zum Abschirmen von Sonnenlicht zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft eine Vorrichtung zum Abschirmen von (z. B. durch eine Windschutzscheibe einfallendem) Sonnenlicht, vorzugsweise eine Sonnenblenden-Vorrichtung, für ein Kraftfahrzeug, vorzugsweise ein Nutzfahrzeug (z. B. Lastkraftwagen oder Omnibus). Die Vorrichtung weist ein Verkleidungsteil auf, das zur Innenverkleidung einer A-Säule des Kraftfahrzeugs ausgebildet ist. Die Vorrichtung weist einen Blendenkörper auf, der bewegbar mit dem Verkleidungsteil verbunden ist.

Bei herkömmlichen Sonnenblende, die oberhalb der Windschutzscheibe angeordnet sind (z. B. Sonnenrollos für Nutzfahrzeuge), ist es aus Bauraum- und Montagegründen typischerweise nicht ohne weiteres möglich, diese so anzuordnen, dass kein Spalt zwischen der Sonnenblende und einer A-Säule des Kraftfahrzeugs besteht. Der Fahrer des Kraftfahrzeugs kann somit bei Gegenlicht durch den Spalt zwischen der A-Säule und beispielsweise dem ausgezogenen Sonnenrollo geblendet werden. Zweckmäßig kann die erfindungsgemäße Vorrichtung dies verhindern. Der Spalt zwischen der A-Säule und dem ausgezogenen Sonnenrollo kann durch den bezüglich der A-Säule bewegbaren Blendenkörper abgedeckt und abgeschattet werden. Dazu kann der bewegbare Blendenkörper in eine Benutzungsstellung bewegt werden, in der er im Spalt positioniert ist. Der Fahrer des Kraftfahrzeugs kann so wirksam vor Gegenlicht/Sonnenlicht abgeschirmt werden, das sonst durch den Spalt einfallen könnte. Es ist auch möglich, dass der Blendenkörper unabhängig von beispielsweise einem weiteren Sonnenrollo oberhalb der Windschutzscheibe verwendet wird, wenn beispielsweise nur Gegenlicht/Sonnenlicht durch den vom Blendenkörper abdeckbaren Bereich der Windschutzscheibe einfällt.

Zweckmäßig kann das Verkleidungsteil zur Befestigung an der A-Säule ausgebildet sein.

Beispielsweise kann das Verkleidungsteil zumindest abschnittsweise schalenförmig sein oder ein U-Profil aufweisen.

Vorzugsweise kann der Blendenkörper zum Abschirmen von durch die Windschutzscheibe einfallendem Sonnenlicht bewegbar sein.

In einem Ausführungsbeispiel ist der Blendenkörper mit dem Verkleidungsteil schwenkbar um eine Schwenkachse verbunden. Vorzugsweise kann die Schwenkachse im Wesentlichen parallel zu einer Längsachse der A-Säule und/oder zu einer Längsachse des Verkleidungsteils verlaufen. Damit kann der Blendenkörper beispielsweise in eine Benutzungsstellung geschwenkt werden, in der er einen Bereich der Windschutzscheibe abdeckt und/oder abschattet. Andererseits kann Blendenkörper in eine nicht-Benutzungsstellung oder Verstaustellung geschwenkt werden, in der er im Bereich der A-Säule positioniert ist, zum Beispiel an dem Verkleidungsteil anliegt.

In einem weiteren Ausführungsbeispiel weist das Verkleidungsteil eine Aufnahme für den Blendenkörper auf, in die der Blendenkörper in einer Verstaustellung des Blendenkörpers zweckmäßig bewegbar, vorzugsweise schwenkbar, ist. Dadurch kann erreicht werden, dass wenn der Blendenkörper beispielsweise nachts oder bei nicht-blendenden Lichtverhältnissen nicht benötigt wird, dieser in die Verstaustellung geschwenkt werden kann, in der der Blendenkörper möglichst wenig Raum und Sicht verbaut.

In einer Weiterbildung ist der Blendenkörper in der Verstaustellung zumindest teilweise oder vollständig bündig mit und/oder zumindest teilweise oder vollständig zurückversetzt zu einer Außenkontur des Verkleidungsteils in der Aufnahme positionierbar. Damit behindert der Blendenkörper in der Verstaustellung die Sicht nicht und ist zudem besonders bauraumgünstig angeordnet.

In einem Ausführungsbeispiel ist die Aufnahme als eine vorzugsweise längliche und/oder rechteckförmige Ausnehmung ausgebildet und/oder an eine Außenform des Blendenkörpers angepasst. Somit kann der Blendenkörper auf einfache Weise innerhalb der Aufnahme verstaut / positioniert werden.

In einem weiteren Ausführungsbeispiel ist die Aufnahme im Bereich einer Schwenkachse des Blendenkörpers vertieft. Damit kann beispielsweise ein ausreichender Bewegungsradius für den Blendenkörper gewährleistet werden. Zusätzlich kann dies beispielsweise bauraum- und montagegünstig im Hinblick auf die Anordnung der zur Bildung der Schwenkachse benötigten Elemente sein.

Es ist möglich, dass die Aufnahme nur an einer Oberseite und/oder einer Unterseite durch entsprechende Wände des Verkleidungsteils begrenzt ist. Somit kann beispielsweise ein vergleichsweise großer Blendenkörper ermöglicht werden, der trotzdem vollständig in der Aufnahme aufnehmbar ist.

Der Blendenkörper ist an dem Verkleidungsteil in einer Benutzungsstellung (z. B. Ausschwenkstellung) des Blendenkörpers arretierbar und vorzugsweise in einer Verstaustellung (z. B. Einschwenkstellung) des Blendenkörpers. Damit kann verhindert werden, dass sich der Blendenkörper aufgrund von Vibrationen des Kraftfahrzeugs ungewünscht bewegt oder klappert.

Der Blendenkörper ist magnetisch an dem Verkleidungsteil in der Benutzungsstellung (und zum Beispiel in der Verstaustellung) arretierbar. Zusätzlich kann der Blendenkörper mechanisch an dem Verkleidungsteil (zum Beispiel in der Verstaustellung und/oder der Benutzungsstellung) arretierbar sein.

Es ist möglich, dass zur magnetischen Arretierung eine magnetische Arretiervorrichtung umfasst ist, die zumindest einen Magneten (z. B. Permanentmagneten) aufweist. Der oder die Magnete können beispielsweise im oder am Verkleidungsteil und/oder im oder am Blendenkörper angeordnet sein.

Bei einer mechanischen Arretiervorrichtung kann die Arretierung beispielsweise auf den Bewegungsmechanismus, zum Beispiel die Schwenkachse, wirken.

In einer weiteren Ausführungsform ist eine Schwenkachse des Blendenkörpers in einem Bereich des Verkleidungsteils angeordnet, der zu einer Vorwärtsfahrtrichtung des Kraftfahrzeugs gewandt ist. Dadurch kann der Blendenkörper auf einfache Weise in Richtung zu der Windschutzscheibe des Kraftfahrzeugs ausgeschwenkt werden, wenn er benötigt wird.

In einer Ausführungsvariante weist der Blendenkörper einen Griffbereich auf. Vorzugsweise kann der Griffbereich in einer Verstaustellung des Blendenkörpers über das Verkleidungsteil überstehen, bevorzugt in einer Richtung entgegengesetzt zu einer Vorwärtsfahrtrichtung des Kraftfahrzeugs. Es ist auch möglich, dass der Griffbereich beispielsweise an einer einer Schwenkachse des Blendenkörpers entgegengesetzten Seite des Blendenkörpers angeordnet ist. Damit kann der Blendenkörper auf einfache Weise durch den Fahrer erreicht, ergriffen und wie gewünscht bewegt werden.

In einer Weiterbildung ist der Griffbereich als ein länglicher Vorsprung ausgeführt, wobei vorzugsweise dessen Längsachse im Wesentlichen parallel zu der Längsachse der A-Säule und/oder zu der Längsachse des Verkleidungsteils verläuft.

In einem Ausführungsbeispiel ist der Blendenkörper in eine Benutzungsstellung bewegbar, vorzugsweise schwenkbar, in der er einen Bereich einer Windschutzscheibe des Kraftfahrzeugs angrenzend an die A-Säule und/oder das Verkleidungsteil abdeckt und/oder abschattet.

In einem weiteren Ausführungsbeispiel ist der Blendenkörper im Wesentlichen rechteckförmig ausgebildet und/oder hochkant mit dem Verkleidungsteil verbunden.

In einer Ausführungsform weist die Vorrichtung ferner ein weiteres Verkleidungsteil, das zur Innenverkleidung zumindest eines vorderen Dachbereichs des Kraftfahrzeugs ausgebildet ist, und eine Sonnenschutzeinrichtung (z. B. Rollo, Rollladen oder Jalousie), die ein- und ausziehbar mit dem weiteren Verkleidungsteil verbunden ist, auf. Vorzugsweise kann der Blendenkörper so angeordnet und/oder dimensioniert sein, dass er in einer Benutzungsstellung des Blendenkörpers einen Spalt zwischen dem Verkleidungsteil und der Sonnenschutzeinrichtung abdeckt und/oder abschattet, vorzugsweise im Wesentlichen vollständig.

Die Erfindung betrifft auch ein Kraftfahrzeug, vorzugweise ein Nutzfahrzeug (zum Beispiel Lastkraftwagen oder Omnibus), mit einer Vorrichtung wie hierin offenbart.

Es ist auch möglich, die Vorrichtung wie hierin offenbart für Personenkraftwagen, geländegängige Fahrzeuge usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht eines A-Säulenbereichs eines Kraftfahrzeugs mit einer beispielhaften Vorrichtung zum Abschirmen von Sonnenlicht gemäß der vorliegenden Offenbarung in einer Verstaustellung; und
- Figur 2: eine perspektivische Ansicht eines A-Säulenbereichs eines Kraftfahrzeugs mit der beispielhaften Vorrichtung zum Abschirmen von Sonnenlicht in einer Benutzungsstellung;
- Figur 3: eine perspektivische Rückansicht eines beispielhaften Blendenkörpers der Vorrichtung zum Abschirmen von Sonnenlicht;
- Figur 4: eine perspektivische Vorderansicht eines beispielhaften Verkleidungsteils der Vorrichtung zum Abschirmen von Sonnenlicht;
- Figur 5: eine perspektivische Rückansicht einer beispielhaften Vorrichtung zum Abschirmen von Sonnenlicht mit dem Blendenkörper von Figur 3 und dem Verkleidungsteil von Figur 4; und
- Figur 6: eine Längsschnittansicht der beispielhaften Vorrichtung zum Abschirmen von Sonnenlicht von Figur 5.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

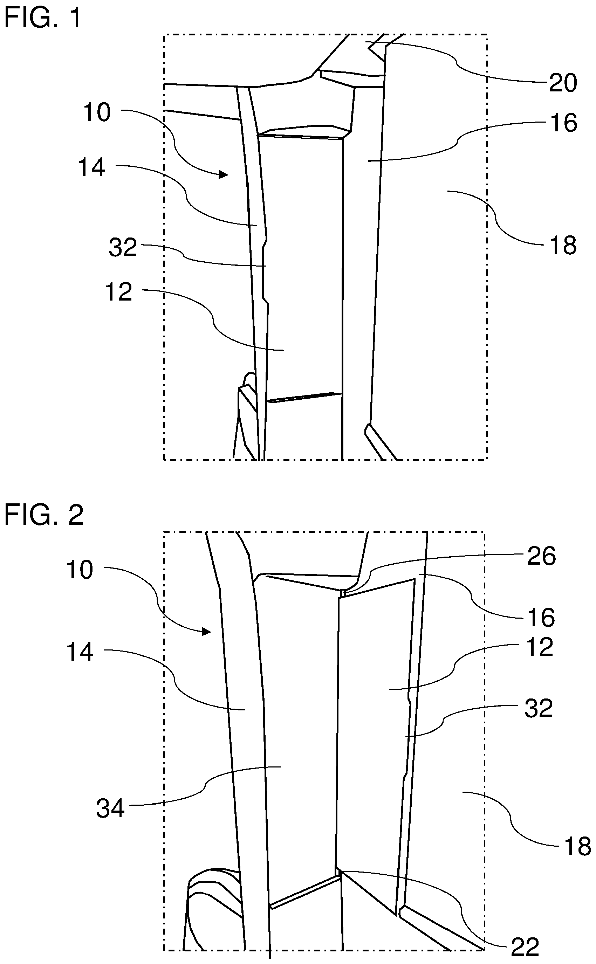

Die Figuren 1 und 2 zeigen eine Vorrichtung 10 zum Abschirmen von Sonnenlicht für ein Kraftfahrzeug. Zweckmäßig ist die Vorrichtung 10 somit als eine Sonnenblenden-Vorrichtung ausgeführt. Das Kraftfahrzeug kann ein Nutzfahrzeug, zum Beispiel ein Lastkraftwagen oder ein Omnibus, sein.

Die Vorrichtung 10 kann einen bewegbaren, vorzugsweise schwenkbaren, Blendenkörper 12 und ein Verkleidungsteil 14 zur Innenverkleidung einer A-Säule (verdeckt in Figur 1 und 2) des Kraftfahrzeugs aufweisen.

Der Blendenkörper 12 kann bewegbar mit dem Verkleidungsteil 14 verbunden sein. Der Blendenkörper 12 ist zwischen einer Verstaustellung (zum Beispiel Einschwenkstellung) und einer Benutzungsstellung (zum Beispiel Ausschwenkstellung) bewegbar, vorzugsweise verschwenkbar. Die Figur 1 zeigt den Blendenkörper 12 in der Verstaustellung. Die Figur 2 zeigt den Blendenkörper 12 in der Benutzungsstellung.

Der Blendenkörper 12 kann insbesondere bei Gegenlicht/Sonnenschein in die Benutzungsstellung (siehe Figur 2) bewegt, zum Beispiel ausgeschwenkt, werden. Wenn der Blendenkörper 12 hingegen nicht benötigt wird, zum Beispiel bei anderen oder normalen Licht- und Sichtverhältnissen oder nachts, kann der Blendenkörper 12 in die Verstaustellung (siehe Figur 1) bewegt, zum Beispiel eingeschwenkt, werden.

Bevorzugt kann der Blendenkörper 12 in der Benutzungsstellung einen Abschnitt einer Windschutzscheibe 16 des Kraftfahrzeugs abdecken. Dieser Abschnitt kann zweckmäßig ein solcher Abschnitt der Windschutzscheibe 16 sein, der montage- und/oder bauraumbedingt nicht durch ein oberhalb der Windschutzscheibe 16 angebrachte, ein- und ausziehbare Sonnenschutzeinrichtung 18 abdeckbar ist. In anderen Worten, der durch den Blendenkörper 12 abdeckbare Abschnitt kann ein Spalt zwischen dem Verkleidungsteil 14 zur Verkleidung der A-Säule und der (teilweise oder vollständig) ausgezogenen Sonnenschutzeinrichtung 18 sein.

Beispielsweise kann die Sonnenschutzeinrichtung 18 ein wickelbares oder faltbares Rollo, ein Rollladen oder eine Jalousie sein. Zweckmäßig kann die Sonnenschutzeinrichtung 18 ein- und ausziehbar mit einem weiteren Verkleidungsteil 20 verbunden sein. Das weitere Verkleidungsteil 20 kann zur Innenverkleidung zumindest eines vorderen Dachbereichs des Kraftfahrzeugs ausgebildet sein. In den Figuren 1 und 2 ist die Sonnenschutzeinrichtung 18 rein beispielhaft als ein zumindest teilweise ausgezogenes (ausgewickeltes) Sonnenrollo dargestellt.

Nachfolgend sind unter Bezugnahme auf die Figuren 1 bis 6 zweckmäßige Konstruktionsdetails des Blendenkörpers 12 und des Verkleidungsteils 14 beschrieben.

Der Blendenkörper 12 kann schwenkbar mit dem Verkleidungsteil 14 verbunden sein. Eine Schwenkachse des Blendenkörpers 12 kann im Wesentlichen parallel zu einer Längsachse des Verkleidungsteils 14 und somit bevorzugt parallel zur A-Säule des Kraftfahrzeugs verlaufen. Die Schwenkverbindung zwischen dem Blendenkörper 12 und Verkleidungsteil 14 kann beispielsweise durch eines oder mehrere Scharniere oder drehbar gelagerte Zapfen- oder Stabelemente ausgeführt sein.

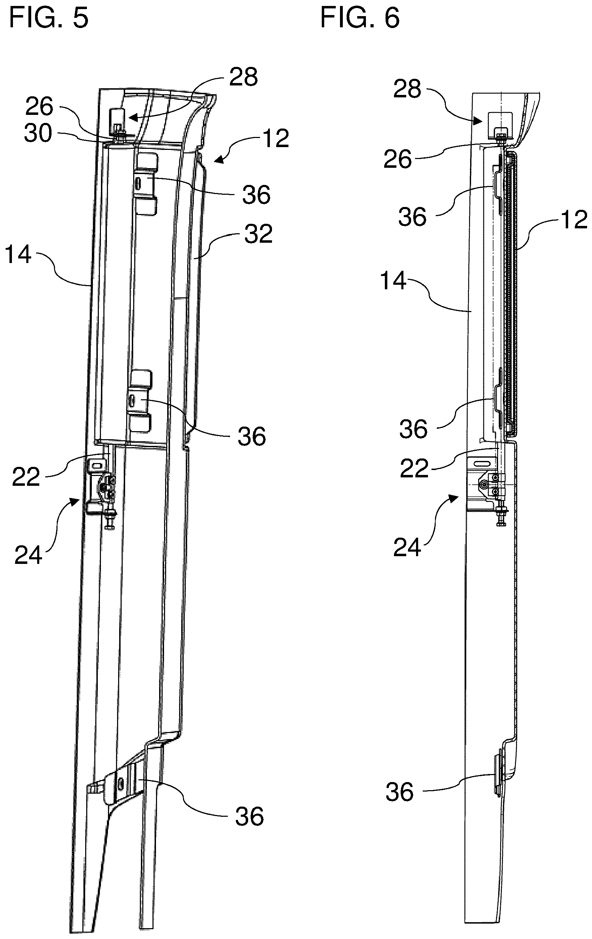

In der dargestellten Ausführungsform von Figur 5 und Figur 6 ist die Schwenkachse des Blendenkörpers 12 gebildet durch ein unteres Zapfenelement 22. Das untere Zapfenelement 22 ist fest mit einem unteren Bereich oder einer Unterseite des Blendenkörpers 12 verbunden, z. B. verklebt. Das untere Zapfenelement 22 ist drehbar in einer Halterung 24 des Verkleidungsteils 14 gelagert. Zusätzlich ist die Schwenkachse des Blendenkörpers 12 durch ein oberes Zapfenelement 26 gebildet. Das obere Zapfenelement 26 ist fest in einer Halterung 28 des Verkleidungsteils 14 gehalten. Das obere Zapfenelement 26 ist in eine obere Öffnung 30 des Blendenkörpers 12 eingeführt, sodass der Blendenkörper 12 durch das obere Zapfenelement 26 geführt drehbar ist.

Zweckmäßig können die Schwenkachse und die Schwenkverbindung in einem Bereich des Blendenkörpers 12 und des Verkleidungsteils 14 angeordnet sein, der einer Vorwärtsfahrtrichtung des Kraftfahrzeugs zugewandt sind. In anderen Worten, die Schwenkachse und die Schwenkverbindung können in einem Bereich der Vorrichtung 10 bzw. des Verkleidungsteils 14 angeordnet sein, der seitlich an die Windschutzscheibe 16 angrenzt.

Der Blendenkörper 12 kann im Wesentlichen rechteckförmig sein. Der Blendenkörper 12 kann hochkant mit dem Verkleidungsteil 14 verbunden sein. Beispielsweise kann der Blendenkörper 12 eine Breite ≥ 100 mm (oder weniger) und/oder ≤ 200 mm (oder mehr) aufweisen. Der Blendenkörper 12 kann beispielsweise eine Höhe ≥ 300 mm (oder weniger) und/oder ≤ 500 mm (oder mehr) aufweisen.

Es ist allerdings beispielsweise auch möglich, den Blendenkörper 12 translatorisch zwischen einer Verstaustellung und einer Benutzungsstellung bewegbar mit dem Verkleidungsteil zu verbinden.

Der Blendenkörper 12 kann einen Griffbereich 32 aufweisen. Zweckmäßig kann der Blendenkörper 12 so an dem Griffbereich 32 gegriffen und zwischen der Verstaustellung (siehe Figur 1) und der Benutzungsstellung (siehe Figur 2) bewegt werden. Der Griffbereich 32 kann an einer Außenseite, insbesondere einer Längsaußenseite, des Blendenkörpers 12 angeordnet sein.

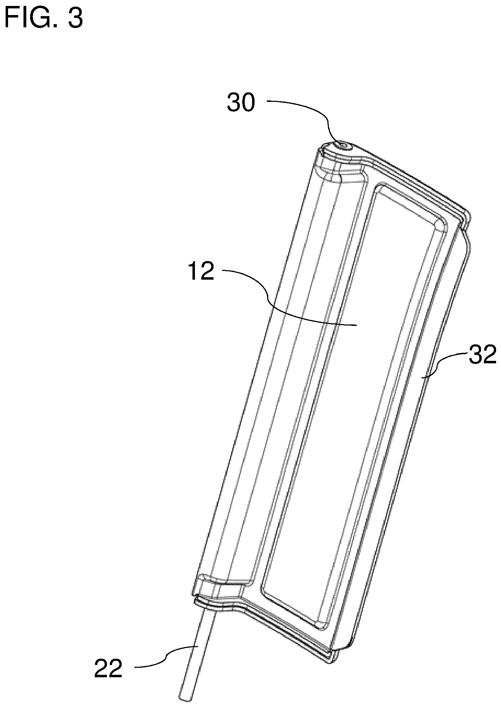

Der Griffbereich 32 kann beispielsweise ergonomisch auf einer der Schwenkachse abgewandten Seite des Blendenkörpers 12 angeordnet sein. Der Griffbereich 32 kann als ein länglicher Vorsprung ausgeführt sein, der sich über eine gesamte Höhe (siehe zum Beispiel Figur 3) oder nur einen Teil davon (siehe Figuren 1 und 2) des Blendenkörpers 12 erstreckt. Eine Längsachse des Griffbereichs 32 kann im Wesentlichen parallel zu der Längsachse der A-Säule und zu der Längsachse des Verkleidungsteils 14 verlaufen.

Der Griffbereich 32 kann zum Erleichtern eines Ergreifens über das Verkleidungsteil 14 überstehen, zum Beispiel wie dargestellt in einer Richtung entgegengesetzt zu der Vorwärtsfahrtrichtung des Kraftfahrzeugs.

Zweckmäßig kann der Blendenkörper 12 zumindest teilweise intransparent sein, um eine Transmission von Gegenlicht/Sonnenlicht zu verhindern. Es ist allerdings auch möglich, dass der Blendenkörper 12 zumindest teilweise transparent oder lediglich abdunkelnd ausgebildet ist, um beispielsweise eine abgeschattete Sicht nach draußen zu ermöglichen.

Das Verkleidungsteil 14 dient dazu, die A-Säule des Kraftfahrzeugs von innen zu verkleiden. Zweckmäßig ist das Verkleidungsteil 14 daher als ein länglicher, zumindest abschnittsweise schalenförmiger Körper ausgebildet. Beispielsweise kann das Verkleidungsteil 14 eine Höhe ≥ 800 mm (oder weniger) und/oder ≤ 1200 mm (oder mehr) aufweisen. Das Verkleidungsteil 14 kann beispielsweise eine Breite ≥ 100 mm (oder weniger) und/oder ≤ 250 mm (oder mehr) aufweisen.

Das Verkleidungsteil 14 kann eine Aufnahme 34 für den Blendenkörper 12 aufweisen. In der Verstaustellung kann der Blendenkörper 12 in der Aufnahme 34 positioniert sein. Insbesondere kann der Blendenkörper 12 zum Einnehmen der Verstaustellung in die Aufnahme 34 eingeschwenkt werden. Die Aufnahme 34 ermöglicht es, dass der Blendenkörper 12, wenn er nicht benutzt wird, möglichst wenig Sicht und Raum verbaut.

Die Aufnahme 34 und der Blendenkörper 12 können so aneinander angepasst sein, dass der Blendenkörper 12 in der Verstaustellung im Wesentlichen bündig mit oder zurückversetzt zu einer Außenkontur des Verkleidungsteils 14 ist, wie in den Figuren 1, 2 und 6 dargestellt ist.

Zweckmäßig ist die Aufnahme 34 als eine vorzugsweise längliche und rechteckförmige Ausnehmung (Vertiefung) ausgebildet. Die Aufnahme 34 ist an eine Außenform des Blendenkörpers 12 angepasst, um diesen in der Verstaustellung vollständig aufzunehmen.

Im Bereich der Schwenkachse kann die Aufnahme 34 vertieft sein, um beispielsweise Bauraum für die Schwenkverbindung zwischen dem Blendenkörper 12 und dem Verkleidungsteil 14 zu schaffen.

Beispielsweise kann die Aufnahme 34 nur an einer Oberseite und einer Unterseite durch entsprechende Wände des Verkleidungsteils 14 begrenzt sein. Somit kann ein vergleichsweise großer Blendenkörper 12 ermöglicht werden, der trotzdem vollständig in der Aufnahme 34 aufnehmbar ist.

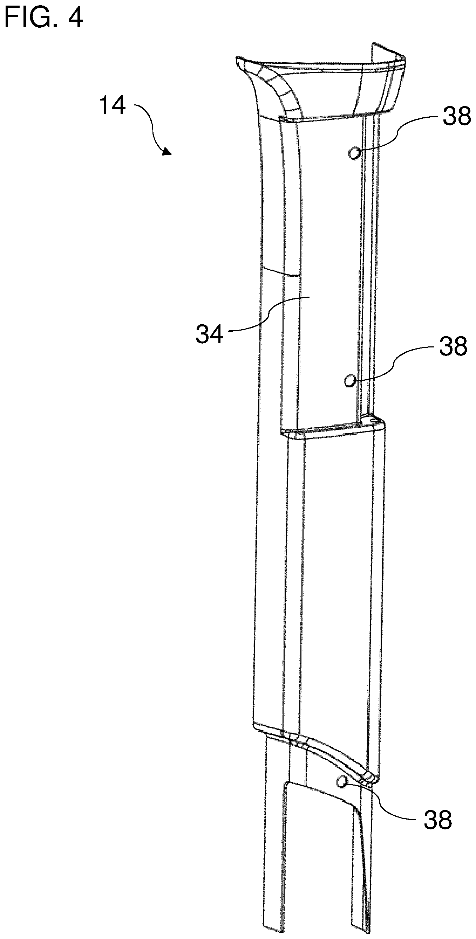

Das Verkleidungsteil 14 kann mittels einer oder mehrerer Halterungen 36 (siehe Figuren 5 und 6) an der A-Säule befestigt, zum Beispiel angeschraubt, sein. Die Halterungen 36 sind an einer Rückseite des Verkleidungsteils 14 angeordnet. Die Halterungen 36 können beispielsweise durch Öffnungen 38 (siehe Figur 4) im Verkleidungsteil 14 zugängig sein, sodass zweckmäßig entsprechende Schrauben durch die Halterungen 36 ein- und ausgeschraubt werden können.

Es ist möglich, dass die Vorrichtung 10 eine Arretiervorrichtung (nicht gesondert dargestellt) aufweist. Mittels der Arretiervorrichtung kann der Blendenkörper 12 in der Verstaustellung und/oder in der Benutzungsstellung arretiert werden, um beispielsweise eine ungewünschte Bewegung des Blendenkörpers 12 bei Vibrationen usw. zu verhindern. Die Arretiervorrichtung kann beispielsweise eine mechanische Arretiervorrichtung sein. Es ist allerdings auch möglich, dass die Arretiervorrichtung beispielsweise eine magnetische Arretiervorrichtung ist, bei der beispielsweise ein Permanentmagnet im oder am Verkleidungsteil 14 mit einem ferromagnetischen Bereich im oder am Blendenkörper 12, oder umgekehrt, zusammenwirken kann, um den Blendenkörper 12 in der Verstaustellung und/oder in der Benutzungsstellung 12 zu arretieren (zu halten).

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Verkleidungsteils und/oder des Blendenkörpers des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Vorrichtung zum Abschirmen von Sonnenlicht
- 12: Blendenkörper
- 14: Verkleidungsteil
- 16: Windschutzscheibe
- 18: Sonnenschutzeinrichtung
- 20: Weiteres Verkleidungsteil
- 22: Zapfenelement
- 24: Halterung
- 26: Zapfenelement
- 28: Halterung
- 30: Öffnung
- 32: Griffbereich
- 34: Aufnahme
- 36: Halterung
- 38: Öffnung

## Patentansprüche

1. Vorrichtung (10) zum Abschirmen von Sonnenlicht, vorzugsweise Sonnenblenden-Vorrichtung, für ein Kraftfahrzeug, vorzugsweise ein Nutzfahrzeug, aufweisend:
ein Verkleidungsteil (14), das zur Innenverkleidung einer A-Säule des Kraftfahrzeugs ausgebildet ist; und
einen Blendenkörper (12), der bewegbar mit dem Verkleidungsteil (14) verbunden ist,
wobei
der Blendenkörper (12) magnetisch an dem Verkleidungsteil (14) arretierbar ist, **dadurch gekennzeichnet, dass**
der Blendenkörper (12) an dem Verkleidungsteil (14) in einer Benutzungsstellung des Blendenkörpers (12) arretierbar ist, nämlich magnetisch.

2. Vorrichtung (10) nach Anspruch 1, wobei:
der Blendenkörper (12) mit dem Verkleidungsteil (14) schwenkbar um eine Schwenkachse verbunden ist, die im Wesentlichen parallel zu einer Längsachse der A-Säule und/oder zu einer Längsachse des Verkleidungsteils (14) verläuft.

3. Vorrichtung (10) nach Anspruch 1 oder Anspruch 2, wobei:
das Verkleidungsteil (14) eine Aufnahme (34) für den Blendenkörper (12) aufweist, in die der Blendenkörper (12) in einer Verstaustellung des Blendenkörpers (12) bewegbar, vorzugsweise schwenkbar, ist.

4. Vorrichtung (10) nach Anspruch 3, wobei:
der Blendenkörper (12) in der Verstaustellung zumindest teilweise oder vollständig bündig mit und/oder zumindest teilweise oder vollständig zurückversetzt zu einer Außenkontur des Verkleidungsteils (14) in der Aufnahme (34) positionierbar ist.

5. Vorrichtung (10) nach Anspruch 3 oder Anspruch 4, wobei:
die Aufnahme (34) als eine längliche und/oder rechteckförmige Ausnehmung ausgebildet und/oder an eine Außenform des Blendenkörpers (12) angepasst ist.

6. Vorrichtung (10) nach einem der vorherigen Ansprüche, wobei:
der Blendenkörper (12) an dem Verkleidungsteil (14) in einer Verstaustellung des Blendenkörpers (12) arretierbar ist, vorzugsweise magnetisch und/oder mechanisch.

7. Vorrichtung (10) nach einem der vorherigen Ansprüche, ferner aufweisend:
eine magnetische Arretiervorrichtung zur magnetischen Arretierung, wobei die magnetische Arretiervorrichtung zumindest einen Magneten, vorzugsweise Permanentmagneten, aufweist.

8. Vorrichtung (10) nach Anspruch 7, wobei:
der oder die Magnete im oder am Verkleidungsteil (14) und/oder im oder am Blendenkörper (12) angeordnet ist/sind; oder
der Magnet ein Permanentmagnet im oder am Verkleidungsteil (14) ist, der mit einem ferromagnetischen Bereich im oder am Blendenkörper (12), oder umgekehrt, zusammenwirkt, um den Blendenkörper (12) in einer Verstaustellung und/oder in einer Benutzungsstellung zu arretieren.

9. Vorrichtung (10) nach einem der vorherigen Ansprüche, ferner aufweisend:
eine mechanische Arretiervorrichtung, die auf einen Bewegungsmechanismus, vorzugsweise eine Schwenkachse des Blendenkörpers (12), wirkt.

10. Vorrichtung (10) nach einem der vorherigen Ansprüche, wobei:
eine Schwenkachse des Blendenkörpers (12) in einem Bereich des Verkleidungsteils (14) angeordnet ist, der zu einer Vorwärtsfahrtrichtung des Kraftfahrzeugs gewandt ist.

11. Vorrichtung (10) nach einem der vorherigen Ansprüche, wobei der Blendenkörper (12) einen Griffbereich (32) aufweist, der:
in einer Verstaustellung des Blendenkörpers (12) über das Verkleidungsteil (14) übersteht, vorzugsweise in einer Richtung entgegengesetzt zu einer Vorwärtsfahrtrichtung des Kraftfahrzeugs; und/oder
an einer einer Schwenkachse des Blendenkörpers (12) entgegengesetzten Seite des Blendenkörpers (12) angeordnet ist.

12. Vorrichtung (10) nach Anspruch 11, wobei:
der Griffbereich (32) als ein länglicher Vorsprung ausgeführt ist, dessen Längsachse im Wesentlichen parallel zu der Längsachse der A-Säule und/oder zu der Längsachse des Verkleidungsteils (14) verläuft.

13. Vorrichtung (10) nach einem der vorherigen Ansprüche, wobei:
der Blendenkörper (12) in eine Benutzungsstellung bewegbar, vorzugsweise schwenkbar, ist, in der er einen Bereich einer Windschutzscheibe (16) des Kraftfahrzeugs angrenzend an die A-Säule und/oder das Verkleidungsteil (14) abdeckt und/oder abschattet; und/oder
der Blendenkörper (12) im Wesentlichen rechteckförmig ausgebildet ist und/oder hochkant mit dem Verkleidungsteil (14) verbunden ist.

14. Vorrichtung (10) nach einem der vorherigen Ansprüche, ferner aufweisend:
ein weiteres Verkleidungsteil (20), das zur Innenverkleidung zumindest eines vorderen Dachbereichs des Kraftfahrzeugs ausgebildet ist, und
eine Sonnenschutzeinrichtung (18), die ein- und ausziehbar mit dem weiteren Verkleidungsteil (20) verbunden ist,
wobei der Blendenkörper (12) so angeordnet und/oder dimensioniert ist, dass er in einer Benutzungsstellung des Blendenkörpers (12) einen Spalt zwischen dem Verkleidungsteil (14) und der Sonnenschutzeinrichtung (18) abdeckt und/oder abschattet, vorzugsweise im Wesentlichen vollständig.

15. Kraftfahrzeug, vorzugweise Nutzfahrzeug, mit einer Vorrichtung (10) nach einem der vorherigen Ansprüche.

## Claims

1. A device (10) for shielding against sunlight, preferably a sun visor device, for a motor vehicle, preferably a utility vehicle, having:
a panel part (14), which is designed for the interior covering of an A pillar of the motor vehicle; and
a visor body (12), which is connected movably to the panel part (14),
wherein
the visor body (12) is lockable magnetically to the panel part (14),
**characterized in that**
the visor body (12) is lockable to the panel part (14) in a use position of the visor body (12), namely magnetically.

2. The device (10) according to Claim 1, wherein:
the visor body (12) is connected to the panel part (14) so as to be pivotable about a pivot axis which runs substantially parallel to a longitudinal axis of the A pillar and/or to a longitudinal axis of the panel part (14) .

3. The device according to Claim 1 or Claim 2, wherein:
the panel part (14) having a receptacle (34) for the visor body (12), into which receptacle the visor body (12) is movable, preferably pivotable, in a stowage position of the visor body (12).

4. The device (10) according to Claim 3, wherein:
the visor body (12) in the stowage position can be positioned in the receptacle (34) at least partially or completely flush with, and/or at least partially or completely set back with respect to, an outer contour of the panel part (14).

5. The device (10) according to Claim 3 or Claim 4, wherein:
the receptacle (34) is designed as an elongate and/or rectangular recess and/or is adapted to an outer shape of the visor body (12).

6. The device (10) according to one of the preceding claims, wherein:
the visor body (12) is lockable to the panel part (14) in a stowage position of the visor body (12), preferably magnetically and/or mechanically.

7. The device (10) according to one of the preceding claims, wherein:
a magnetic locking device for magnetic locking, wherein the magnetic locking device comprises at least one magnet, preferably permanent magnets.

8. The device (10) according to Claim 7, wherein:
the magnet or magnets is/are arranged in or on the panelling part (14) and/or in or on the visor body (12); or
the magnet is a permanent magnet in or on the panel part (14) which interacts with a ferromagnetic region in or on the visor body (12), or vice versa, in order to lock the panel body (12) in a stowed position and/or in a position of use.

9. The device (10) according to one of the preceding claims, further comprising:
a mechanical locking device which acts on a movement mechanism, preferably a pivot axis of the aperture body (12) .

10. The device (10) according to one of the preceding claim, wherein:
a pivot axis of the visor body (12) is arranged in a region of the panel part (14) that faces a forwards direction of travel of the motor vehicle.

11. The device (10) according to one of the preceding claims, wherein the visor body (12) has a gripping region (32) which:
in a stowage position of the visor body (12) protrudes over the panel part (14), preferably in a direction opposite to a forwards direction of travel of the motor vehicle; and/or
is arranged on a side of the visor body (12) that is opposite a pivot axis of the visor body (12).

12. The device (10) according to Claim 11, wherein:
the gripping region (32) is in the form of an elongate protrusion, the longitudinal axis of which runs substantially parallel to the longitudinal axis of the A pillar and/or to the longitudinal axis of the panel part (14) .

13. The device (10) according to one of the preceding claims, wherein:
the visor body (12) is movable, preferably pivotable, into a use position in which it covers and/or shades a region of a windscreen (16) of the motor vehicle adjacent to the A pillar and/or to the panel part (14); and/or
the visor body (12) is substantially rectangular and/or is connected upright to the panel part (14).

14. The device (10) according to one of the preceding clams, furthermore having:
a further panel part (20), which is designed for the interior covering of at least a front roof region of the motor vehicle, and
a sun protection apparatus (18) which is connected retractably and extendably to the further panel part (20),
wherein the visor body (12) is arranged and/or dimensioned in such a manner that it covers and/or shades, preferably substantially completely, a gap between the panel part (14) and the sun protection apparatus (18) in a use position of the visor body (12).

15. A motor vehicle, preferably a utility vehicle, with a device (10) according to one of the preceding claims.

## Revendications

1. Dispositif (10) de protection contre la lumière solaire, de préférence dispositif pare-soleil, pour un véhicule automobile, de préférence un véhicule utilitaire, présentant :
une partie d'habillage (14) qui est réalisée pour l'habillage intérieur d'un montant A du véhicule automobile ; et
un corps de store (12) qui est relié de manière mobile à la partie d'habillage (14),
dans lequel
le corps de store (12) peut être arrêté de manière magnétique au niveau de la partie d'habillage (14), **caractérisé en ce que**
le corps de store (12) peut être arrêté, notamment de manière magnétique, au niveau de la partie d'habillage (14) dans une position d'utilisation du corps de store (12).

2. Dispositif (10) selon la revendication 1, dans lequel :
le corps de store (12) est relié à la partie d'habillage (14) de manière à pouvoir pivoter autour d'un axe de pivotement qui s'étend substantiellement en parallèle à un axe longitudinal du montant A et/ou à un axe longitudinal de la partie d'habillage (14).

3. Dispositif (10) selon la revendication 1 ou la revendication 2, dans lequel :
la partie d'habillage (14) présente un logement (34) pour le corps de store (12) dans lequel le corps de store (12) peut être déplacé, de préférence déplacé par pivotement, dans une position escamotée du corps de store (12).

4. Dispositif (10) selon la revendication 3, dans lequel :
dans la position escamotée, le corps de store (12) peut être positionné dans le logement (34) au moins partiellement ou entièrement de niveau avec et/ou au moins partiellement ou entièrement en retrait par rapport à un contour extérieur de la partie d'habillage (14) .

5. Dispositif (10) selon la revendication 3 ou la revendication 4, dans lequel :
le logement (34) est réalisé sous la forme d'un évidement allongé et/ou rectangulaire et/ou est adapté à une forme extérieure du corps de store (12).

6. Dispositif (10) selon l'une quelconque des revendications précédentes, dans lequel :
le corps de store (12) peut être arrêté, de préférence de manière magnétique et/ou mécanique, au niveau de la partie d'habillage (14) dans une position escamotée du corps de store (12).

7. Dispositif (10) selon l'une quelconque des revendications précédentes, présentant en outre :
un dispositif d'arrêt magnétique pour un arrêt magnétique, le dispositif d'arrêt magnétique présentant au moins un aimant, de préférence un aimant permanent.

8. Dispositif (10) selon la revendication 7, dans lequel :
le ou les aimant(s) est/sont disposé(s) dans ou sur la partie d'habillage (14) et/ou dans ou sur le corps de store (12) ; ou
l'aimant est un aimant permanent dans ou sur la partie d'habillage (14), qui coopère avec une zone ferromagnétique dans ou sur le corps de store (12), ou vice versa, afin d'arrêter le corps de store (12) dans une position escamotée et/ou dans une position d'utilisation.

9. Dispositif (10) selon l'une quelconque des revendications précédentes, présentant en outre :
un dispositif d'arrêt mécanique qui agit sur un mécanisme de déplacement, de préférence un axe de pivotement, du corps de store (12).

10. Dispositif (10) selon l'une quelconque des revendications précédentes, dans lequel :
un axe de pivotement du corps de store (12) est disposé dans une zone de la partie d'habillage (14) qui est orientée dans un sens de la marche avant du véhicule automobile.

11. Dispositif (10) selon l'une quelconque des revendications précédentes, dans lequel le corps de store (12) présente une zone de préhension (32) qui :
dans une position escamotée du corps de store (12), dépasse de la partie d'habillage (14), de préférence dans un sens opposé au sens de la marche avant du véhicule automobile ; et/ou
est disposée sur un côté du corps de store (12), opposé à un axe de pivotement du corps de store (12).

12. Dispositif (10) selon la revendication 11, dans lequel :
la zone de préhension (32) est réalisée sous la forme d'une saillie allongée dont l'axe longitudinal s'étend substantiellement en parallèle à l'axe longitudinal du montant A et/ou à l'axe longitudinal de la partie d'habillage (14).

13. Dispositif (10) selon l'une quelconque des revendications précédentes, dans lequel :
le corps de store (12) peut être déplacé, de préférence déplacé par pivotement, dans une position d'utilisation dans laquelle il couvre et/ou crée de l'ombre sur une zone d'un pare-brise (16) du véhicule automobile, adjacente au montant A et/ou à la partie d'habillage (14) ; et/ou
le corps de store (12) est réalisé de manière substantiellement rectangulaire et/ou est relié à la partie d'habillage (14) en étant placé debout.

14. Dispositif (10) selon l'une quelconque des revendications précédentes, présentant en outre :
une autre partie d'habillage (20) qui est réalisée pour l'habillage intérieur d'au moins une zone de pavillon du véhicule automobile, et
un dispositif de protection solaire (18) qui est relié à l'autre partie d'habillage (20) de manière à pouvoir être rentré et sorti,
le corps de store (12) étant disposé et/ou dimensionné de telle sorte que dans une position d'utilisation du corps de store (12), il couvre et/ou crée de l'ombre sur un espace entre la partie d'habillage (14) et le dispositif de protection solaire (18), de préférence de manière substantiellement totale.

15. Véhicule automobile, de préférence véhicule utilitaire, comprenant un dispositif (10) selon l'une quelconque des revendications précédentes.
